# Europäisches Patentamt

## European Patent Office

## Office européen des brevets

(19)

(11) Veröffentlichungsnummer: **0 286 633**
**B1**

(12) # EUROPÄISCHE PATENTSCHRIFT

(45) Veröffentlichungstag der Patentschrift:
26.07.89

(51) Int. Cl.⁴: **B 60 C 23/04**

(21) Anmeldenummer: 86906282.8

(22) Anmeldetag: 05.11.86

(86) Internationale Anmeldenummer:
PCT/DE 86/00443

(87) Internationale Veröffentlichungsnummer:
WO 87/03545 (18.06.87 Gazette 87/13)

(54) **REIFENDRUCKSENSOR FÜR KRAFTFAHRZEUGE.**

(30) Priorität: 12.12.85 DE 3543865

(43) Veröffentlichungstag der Anmeldung:
19.10.88 Patentblatt 88/42

(45) Bekanntmachung des Hinweises auf die Patenterteilung:
26.07.89 Patentblatt 89/30

(84) Benannte Vertragsstaaten:
DE FR GB IT SE

(56) Entgegenhaltungen:
DE-A- 3 108 998
DE-A- 3 413 209
FR-A- 2 492 741

(73) Patentinhaber: **ROBERT BOSCH GMBH, Postfach 50,
D-7000 Stuttgart 1 (DE)**

(72) Erfinder: **HAAS, Lothar, Kastanienweg 10, D-8504 Stein
(DE)**
Erfinder: **HETTICH, Gerhard, Martin-Renz-Strasse 8,
D-8501 Dietenhofen (DE)**
Erfinder: **SCHMID, Hans-Dieter, Kamenzerstrasse 8,
D-8500 Nürnberg 60 (DE)**

ACTORUM AG

## Beschreibung

### Stand der Technik

Die Erfindung geht aus von einem Reifendrucksensor für Kraftfahrzeuge nach der Gattung des Hauptanspruchs. Bei einem bekannten Reifendrucksensor (DE-OS 31 08 998) ist eine Referenzdruckkammer mit einer Membran zu dem unter Luftdruck stehenden Raum des Fahrzeugrades hin abgeschlossen, wobei die Membran gleichzeitig den beweglichen Teil eines mechanischen Schalters bildet, der beim Unterschreiten des überprüften zulässigen Mindestluftdrucks im Reifen öffnet. Der Schalter liegt in einem Schwingkreis mit einem Kondensator und einer Spule, die an dem nach aussen gerichteten Ende des Reifendrucksensors auf einem Spulenkörper aus Isolierstoff angeordnet ist. Die mit dem Reifendrucksensor umlaufende Spule wirkt mit einem ortsfesten Signalaufnehmer zusammen, an dem sie bei jeder vollen Umdrehung des Rades einmal vorbeigedreht und dabei von einer hochfrequenten Schwingung des Aufnehmers durchsetzt wird. Bei geschlossenem Schwingkreis des Reifendrucksensors, d. h. bei ausreichend hohem Reifendruck wird diese Schwingung bei jedem Vorbeilaufen des Reifendrucksensors gedämpft. In einer mit dem ortsfesten Signalaufnehmer verbundenen Auswerteschaltung wird diese Dämpfung erkannt und erst bei ihrem Ausbleiben während der Fahrt wird in der Auswerteschaltung ein Alarmsignal ausgelöst.

Aus der DE-OS 34 13 209 ist es ferner bekannt, den ortsfesten Signalaufnehmer aus einem Schalenkern mit darin angeordneter Spule auszubilden, dessen offene Seite zur Spule des umlaufenden Reifendrucksensors hin gerichtet ist.

Da einerseits die vom ortsfesten Signalaufnehmer zur Verfügung gestellte Energie der Hochfrequenzschwingung begrenzt ist, andererseits die Abmessungen des Reifendrucksensors möglichst klein gehalten werden müssen, war es erforderlich, zwischen dem Signalaufnehmer und dem Reifendrucksensor bei den bekannten Lösungen einen möglichst kleinen Luftspalt von wenigen Millimetern zu realisieren. Dies bedeutet einen hohen Montageaufwand mit besonderer Justierung der einzelnen Signalaufnehmer. Mit zunehmendem Raddurchmesser bei schwereren Fahrzeugen ist ausserdem durch Unwucht, Fertigungstoleranzen und dgl. der erwünschte kleine Luftspalt für längere Betriebszeiten kaum realisierbar.

Mit der vorliegenden Lösung wird angestrebt, durch eine bessere Kopplung der hochfrequenten Schwingung zwischen Signalaufnehmer und umlaufender Spule des Reifendrucksensors ihren Detektionsabstand zu erhöhen.

### Vorteile der Erfindung

Der erfindungsgemässe Reifendrucksensor mit dem kennzeichnenden Merkmal des Hauptanspruchs hat den Vorteil, dass bei gleichgrosser Abmessung des Reifendrucksensors durch die Anordnung der Spule auf einem Mittelschenkel eines tellerförmigen Ferritkernes die magnetische Kopplung gegenüber den bekannten Ausführungen erheblich verbessert werden konnte. Daraus ergibt sich als weiterer Vorteil ein grösserer möglicher Luftspalt zwischen Signalaufnehmer und umlaufender Spule und somit eine grössere Luftspalttoleranz und einfachere Montage des Signalaufnehmers.

Durch die in den Unteransprüchen aufgeführten Massnahmen sind vorteilhafte Weiterbildungen und Verbesserungen des im Hauptanspruch angegebenen Merkmals möglich. Besonders vorteilhaft im Hinblick auf eine gute magnetische Kopplung ist es, wenn auch die ortsfeste Aufnehmerspule auf einen Mittelschenkel eines tellerförmigen Ferritkernes angeordnet ist. Zur Befestigung des Ferritkernes mit der Spule im Reifendrucksensor ist es ferner vorteilhaft, wenn der Mittelschenkel ein axial durchgehendes Loch aufweist, an dem der Ferritkern von einem magnetisch unwirksamen Tragteil im Gehäuse des Reifendrucksensors aufgenommen ist.

### Zeichnung

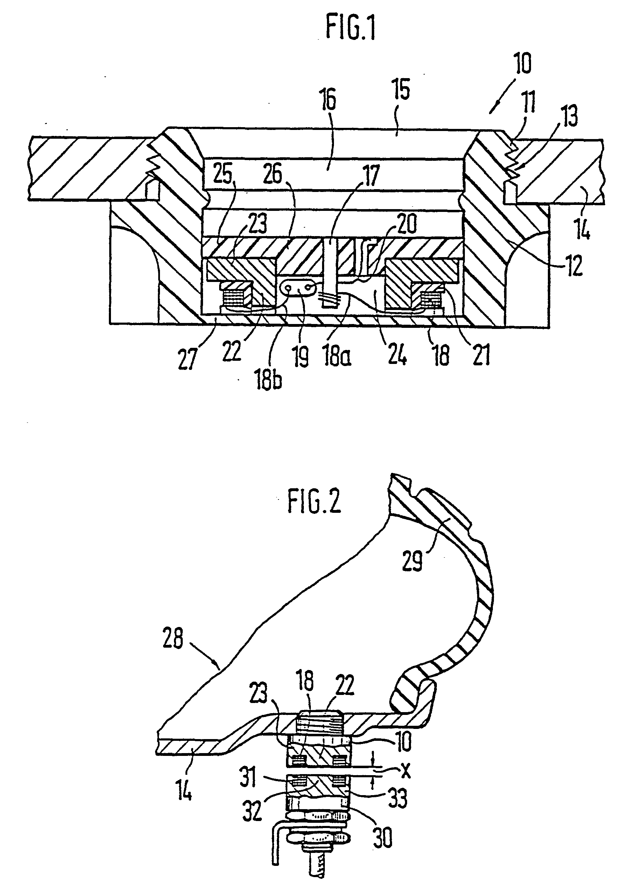

Ein Ausführungsbeispiel der Erfindung ist in der Zeichnung dargestellt und in der nachfolgenden Beschreibung näher erläutert. Es zeigen Figur 1 einen erfindungsgemässen Reifendrucksensor in einer Radfelge im Querschnitt und in vergrösserter Darstellung und Figur 2 in verkleinertem Massstab die Anordnung des Reifendrucksensors an der Radfelge gegenüber dem ortsfest angeordneten Signalaufnehmer.

### Beschreibung des Ausführungsbeispiels

In Figur 1 ist ein vergrössert dargestellter Reifendrucksensor mit 10 bezeichnet. Er ist mit einem Gewindeansatz 11 seines Isolierstoffgehäuses 12 in eine Gewindebohrung 13 einer Radfelge 14 eingeschraubt. In dem Isolierstoffgehäuse 12 ist vorn in einer zum Reifen hin gerichteten Öffnung 15 ein vom Luftdruck im Fahrzeugreifen zu beaufschlagendes Druckelement 16, beispielsweise eine als Schalter dienende Referenzdruckkammer gemäss DE-A-31 08 998 befestigt. An der dem Druckraum des Reifens abgewandten Stirnseite ist das Druckelement 16 mit einem Anschlussstift 17 versehen, an dem das eine Ende 18a einer Koppelspule 18 befestigt ist. Die Koppelspule 18 bildet zusammen mit einem Kondensator 19 einen Schwingkreis, in welchem das Druckelement 16 eingeschaltet ist. Der Kondensator 19 ist einerseits mit dem zweiten Ende 18b der Koppelspule 18 und andererseits über einen Leiter 20 mit dem Gehäuse des Druckelements 16 elektrisch leitend verbunden.

Die Koppelspule 18 ist mit ihrem Spulenkörper 21 aus Isolierstoff auf einem Mittelschenkel 22 eines tellerförmigen Ferritkernes 23 angeordnet. Der Mittelschenkel 22 ist dabei mit einem axial durchgehenden Loch 24 versehen, in dem einerseits ein magnetisch unwirksames Tragteil 25 aus Kunststoff mit einem entsprechenden Ansatz 26 zur Fixierung des Ferritkernes 23 eingreift und in dem andererseits der Kondensator 19 in einer nicht dargestellten Vergussmasse eingebettet ist. Das Isolierstoffgehäuse 12 des Reifendrucksensors deckt die Koppelspule 18 nach aussen mit seinem Boden 27 ab, der zugleich die Koppelspule 18, den Ferritkern 23 und das Tragteil 25 axial festlegt.

In Figur 2 ist ein Ausschnitt eines Fahrzeugrades 28 mit der Radfelge 14 und dem Reifen 29 dargestellt. Dabei ist erkennbar, dass der Reifendrucksensor 10 in einem innenliegenden Bereich der Felge 14 eingeschraubt ist und somit gegen Beschädigungen von aussen weitgehend geschützt liegt. Erkennbar ist ferner ein ortsfest an der Radaufhängung angeordneter Signalaufnehmer 30, dessen Aufnehmerspule 31 ebenfalls auf einem Mittelschenkel 32 eines tellerförmigen Ferritkernes 33 angeordnet ist. Durch die gewählte Form der Ferritkerne 23 und 33 wird erreicht, dass beim Vorbeidrehen des Reifendrucksensors 10 am Signalaufnehmer 30 möglichst viele der vom Signalaufnehmer 30 ausgesendeten Feldlinien einer Hochfrequenzschwingung die Koppelspule 18 des Reifendrucksensors 10 durchsetzen. Besonders günstige Verhältnisse ergeben sich, wenn gemäss Figur 2 der Ferritkern 33 des Signalaufnehmers 30 die gleiche Form aufweist wie der Ferritkern 23 der Koppelspule 18 des Reifendrucksensors 10. Durch die erfindungsgemässe Ausgestaltung kann hierbei ein Luftspalt $x$ von über 10 mm gewählt werden, ohne dass dabei die Funktionsfähigkeit der Reifendrucküberwachungseinrichtung gefährdet wird.

## Patentansprüche

1. Reifendrucksensor für Kraftfahrzeuge mit einem am Umfang einer Radfelge (14) zu befestigenden elektrischen Schwingkreis (18, 19), mit einer Koppelspule (18) und einem damit in Reihe liegenden, vom Luftdruck im Fahrzeugreifen zu beaufschlagenden Druckelement (16), wobei die mit der Radfelge umlaufende Koppelspule mit einer ihr gegenüberstehenden, im Bereich der Radfelge ortsfest angeordneten und die Schwingung des Schwingkreises abfühlenden Aufnehmerspule (39) zusammenwirkt, welche mit einer Auswerteschaltung verbunden ist, dadurch gekennzeichnet, dass die mit der Radfelge (14) umlaufende Koppelspule (18) auf einem Mittelschenkel (26) eines tellerförmigen Ferritkernes (25) angeordnet ist.

2. Reifendrucksensor nach Anspruch 1, dadurch gekennzeichnet, dass der Mittelschenkel (26) ein axial durchgehendes Loch (24) aufweist, an dem der Ferritkern (23) von einem magnetisch unwirksamen Tragteil (25) im Gehäuse (12) des Reifendrucksensors (10) aufgenommen ist.

3. Reifendrucksensor nach Anspruch 1 oder 2, dadurch gekennzeichnet, dass auch die ortsfeste Aufnehmerspule (31) auf einem Mittelschenkel (32) eines tellerförmigen Ferritkernes (33) angeordnet ist.

## Claims

1. Tyre pressure sensor for motor vehicles with an electric resonant circuit (18, 19) to be fastened on the periphery of a wheel rim (14), with a coupling coil (18) and, in series with it, a pressure element (16) to be acted upon by the air pressure in the vehicle tyre, the coupling coil rotating with the wheel rim interacting with a receiving coil (39), which is opposite it, is fixed in the region of the wheel rim, senses the oscillation of the resonant circuit and is connected to an evaluation circuit, characterized in that the coupling coil (18) rotating with the wheel rim (14) is arranged on a middle branch (26) of a disc-shaped ferrite core (25).

2. Tyre pressure sensor according to Claim 1, characterized in that the middle branch (26) has an axially penetrating hole (24), at which the ferrite core (23) is received by a magnetically inactive supporting part (25) in the housing (12) of the tyre pressure sensor (10).

3. Tyre pressure sensor according to Claim 1 or 2, characterized in that the fixed receiving coil (31) is also arranged on a middle branch (32) of a disc-shaped ferrite core (33).

## Revendications

1. Capteur de pression de pneumatique de véhicule automobile avec un circuit électrique oscillant (18, 19) fixé à la périphérie d'une jante (14), avec une bobine de couplage (18) et un élément de pression (16) soumis à la pression du pneumatique du véhicule, qui est en série avec la bobine, la bobine de couplage tournant avec la jante coopère avec une bobine (39) réceptrice, disposée de manière fixe à proximité de la jante, détectant les oscillations du circuit oscillant et reliée elle-même à un circuit d'évaluation, caractérisé en ce que la bobine de couplage (18) tournant avec la jante 14 est placée sur une patte médiane (26) d'un noyau de ferrite en forme de disque (25).

2. Capteur de pression de pneumatique selon la revendication 1, caractérisé en ce que la patte médiane (26) présente un trou traversant (24), grâce auquel le noyau de ferrite (23) est maintenu dans le boîtier (12) du capteur (10) de pression du pneumatique grâce à une pièce-support (25) magnétiquement inerte.

3. Capteur de pression de pneumatique selon la revendication 1 ou 2, caractérisé en ce que la bobine réceptrice fixe (31) est aussi placée sur un noyau de ferrite (33) en forme de disque.

# FIG.1

# FIG.2